# EUROPEAN PATENT SPECIFICATION

(11) **EP 1 659 579 B1**
(45) Date of publication and mention of the grant of the patent: **25.03.2009**
(21) Application number: 05023313.9
(22) Date of filing: 25.10.2005
(51) Int. Cl.: G11B 7/257, G11B 7/243

(54) **Optical recording medium**
Optisches Aufzeichnungsmedium
Support d'enregistrement optique

(30) Priority: 26.10.2004 JP 2004311584; 09.02.2005 JP 2005033663
(43) Date of publication of application: 24.05.2006
(73) Proprietor: Ricoh Company, Ltd., Tokyo 143-8555 (JP)
(72) Inventor: Abe, Mikiko, Tokyo 143-8555 (JP); Ito, Kazunori, Tokyo 143-8555 (JP); Deguchi, Hiroshi, Tokyo 143-8555 (JP); Kato, Masaki, Tokyo 143-8555 (JP); Ohkura, Hiroko, Yokohama-shi Kanagawa-ken (JP); Sekiguchi, Hiroyoshi, Tokyo 143-8555 (JP)
(74) Representative: Barz, Peter

(56) References cited:
- EP-A- 1 260 973
- EP-A- 1 398 768
- PATENT ABSTRACTS OF JAPAN vol. 2003, no. 12, 5 December 2003 (2003-12-05) & JP 2003 248967 A (RICOH CO LTD), 5 September 2003 (2003-09-05)

## Description

### BACKGROUND OF THE INVENTION

### Field of the Invention

The present invention relates to a high speed rewritable optical recording medium in which information can be recorded even at a linear recording speed of not slower than 20 m/s (corresponding to DVD ×6).

### Discussion of the Background

There are known technologies by which repetitive recording characteristics of an optical recording medium are improved. For example, published unexamined Japanese patent application No. (hereinafter referred to as JOP) 2001-126312 describes an optical recording medium having at least two dielectric layers between a substrate and a recording layer. The dielectric layer that contacts the recording layer is formed of a mixture of at least one material selected fromA group materials consisting of SiO₂, Al₂O₃, SiAlON, Si₃N₄, A1N, SiC, SiON and SiO) and at least one material selected from B group materials consisting of Cr₂O₃, CrN, TaN and GeN. The recording layer is formed of Ge_{α}Sb_{β}Te_{γ}MA_{δ} (MA represents an element of various kinds, α, β, γ, and δ represent atomic %) or Ag_{ε}In_{ζ}Sb_{η}Te_{θ}MB_{κ} (MB represents an element of various kinds, ε,ζ,η,θ and κ represent atomic %).

JOP H11-339314 describes an optical recording medium having a layer formed of an oxide between a recording layer and a first dielectric layer. The layer formed of an oxide mainly includes an oxide of an element selected from 2A to 4B group in the third period in the periodic table, 2A to 4B group in the fourth period therein, 2A to 4B group in the fifth period therein, or 2A to 5B group in the sixth period, especially zirconium oxide or zirconium oxide containing an oxide of 2A or 3A group except for beryllium in an amount 2 to 30 mol %. The layer thickness of the layer formed of an oxide is from 0.5 to 10 nm.

JOP 2002-074739 describes an optical recording medium having at least a first dielectric layer, a first interface layer, a recording layer, a second interface layer, an optical compensation layer, and a reflective layer on a substrate in this order. The composition of the recording layer is represented by {[(Ge1-kSnk) _{0.5}Te_{0.5}] × (Sb_{0.4}Te_{0.6})1-x}1-ySbyAz (A represents an element selected from the elements in the 3 to 14 group in the third to sixth period in the periodic table except for Ge, Sb, and Te). The first interface layer and the second interface layer are mainly formed of at least one element and/or oxide selected from the group consisting of carbon, carbides, oxides and nitrides.

JOPs 2001-167475 and 2001-126308 describe an optical recording medium having at least a contact layer, and a recording layer adjacent thereto, which are accumulated on a substrate in this order. The contact layer is formed of an oxide or a carbide of an element of various kinds.

JOP 2000-182277 describes an optical recording medium having at least one interface layer formed of a sulfide-free material while contacting with either side or both sides of a recording layer. The interface layer contains at least one of a nitride, an oxide, a carbide, especially at least one of germanium nitride, silicon nitride, aluminum nitride, zirconium oxide, chromium oxide, silicon carbide and carbon. The recording layer contains at least Sb and Te.

JOP 2002-312979 describes an optical recording medium having an interface layer provided between a protective layer on a substrate side and a recording layer and/or a recording layer and a protective layer on a reflective layer side. The intermediate layer contains a nitride, an oxide, a carbide or a mixture thereof and has a layer thickness of from 3 to 10 nm. The recording layer mainly contains Ge, Sb, and Te.

JOP 2003-303446 describes an optical recording medium having a heat diffusion adjustment layer provided between a first protective layer and a recording layer. In the optical recording medium, KM representing the thermal conductivity of the heat diffusion adjustment layer is less than K1 representing the thermal conductivity of the first protective layer. The heat diffusion adjustment layer is formed of a material mainly containing a mixture of SiO₂, Al₂O₃ and TiO₂, ZrO₂, a mixture of ZrO₂ and Y₂O₃ or a mixture of ZrO₂, Y₂O₃ and TiO₂.

JOP 2003-248967 describes an optical recording medium having a transparent substrate on which a bottom protective layer, a second bottom protective layer, a recording layer reversibly phase changing between an amorphous phase and a crystalline phase, a top protective layer containing a sulfide, an anti-sulfuration layer, and a reflective layer mainly formed of Ag are accumulated in this order. The second bottom protective layer is an oxide containing ZrO₂. The recording layer is represented by Ga_{α}Ge_{β}In_{γ}Sb_{δ}X_{ε}Te₁₀₀ - (α + p + γ + δ +ε) (X represents at least one of Ag, Cu, Dy and Mg, and α, β, γ, δ and ε are atomic %) .

As mentioned above, these JOPS describe various kinds of examples in which a new layer containing a nitride, an oxide, or a carbide containing Si or O, or a mixture thereof, is provided at a border portion provided between the first protective layer and the recording layer to improve repetitive recording characteristics. From the present inventors' point of view, the effects of technologies described therein are not sufficient in most cases. In addition, there is no mention therein about the content of Si or O contained in the border portion, selection of a recording material effective to improve repetitive recording characteristics, and layer structures.

As the amount of information increases, recording media in which high speed reading and writing massive data can be performed with high density have been demanded. A phase change optical recording medium, especially a phase change optical disc, in which information is read and written by irradiation of light beam, has good signal quality and is suitable for higher information density. In addition, one beam overwriting (repetitive recording) can be easily performed. Therefore, a phase change optical disc is a recording medium excellent in a high speed accessibility.

Such a phase change optical disc typically has an optically transparent substrate having a concave guide groove to guide scanning of a laser beam. On the substrate, at least a first protective layer, a phase change recording layer reversibly phase changing between an amorphous phase and a crystalline phase, a second protective layer and a reflective layer containing a metal are accumulated in this order. Further, a resin protective layer is provided on the reflective layer. In addition, an optical recording medium can be formed by bonding the structure mentioned above to each other or to a substrate with a bonding layer therebetween.

The method of writing and reading signals in a phase change optical recording medium is as follows:
(1) Rotate an optical recording medium at a constant linear velocity or a constant angular velocity with a device such as a motor; and
(2) Irradiate the phase change recording layer of the medium with a focused laser beam which is modulated based on intensity.

The phase change recording layer changes its phase between crystalline state and amorphous state depending on the irradiation conditions of a laser beam. The pattern formed based on the difference in the phase states forms a signal pattern. Information is read by detecting the reflectivity difference caused by the difference in the phase states.

A recording method for a phase change optical recording medium is described, for instance, in EP-A-1 398 768.

Intensity of the focused laser beam is modulated among three output levels. The highest output level (hereinafter referred to as the recording power) of the three is used to melt a phase change recording layer. The middle output level (hereinafter referred to as the erasing power) is used to heat a phase change recording layer to a temperature just below its melting point but higher than its crystallization point. The lowest output level is used to control heating and cooling of the phase change recording layer.

The phase change recording layer melted by the laser beam of the recording power is rapidly cooled down by the lowest output laser beam to achieve an amorphous state or form fine crystal. Thereby, the reflectivity of the phase change recording layer decreases, resulting in formation of a recording mark (an amorphous mark). In addition, the phase change recording layer achieves a crystalline state when irradiated with a laser beam having the erasing power, resulting in erasure of a recording mark.

Information can be recorded by using a laser beam modulated among three output levels by which a crystalline state area and an amorphous state area are alternatively formed on the phase change recording layer.

To perform a high speed recording, it is preferred to use a phase change material having a fast crystallization speed as a phase change recording layer. The inventors of the present invention have found a phase change material formed of Ag-In-Sb-Te-Ge as a recording material for a high speed rewriteable optical recording medium such as DVD ×1 to 2.4 and DVD ×1 to 4. In addition, as a recording material for a higher speed rewriteable optical recording medium having a recording speed of DVD ×3 to 10, the inventors of the present invention have also found and described, for example in JOP 2004-029923, that a phase change material formed of Ga-Sb-Sn-Ge has a faster crystallization speed and a higher erase ratio during high speed recording than the material formed of Ag-In-Sb-Te-Ge.

However, when the inventors of the present invention performed a high speed recording corresponding to DVD x 8 using the phase change material formed of Ga-Sb-Sn-Ge, the recording sensitivity thereof was low. In addition, when the recording power was enhanced to compensate the deficiency of the recording sensitivity, such a drawback occurred that the repetitive recording characteristics deteriorated.

The reason why the recording sensitivity and the repetitive recording characteristics deteriorate is considered as follows.

That is, during the high speed recording, it is preferred to control heating and cooling a recording layer in a short time. Therefore, the pulse width of light pulse with which the recording layer is irradiated is narrow. Therefore, a higher recording power is suitable during recording, meaning that the recording sensitivity deteriorates. When the pulse width is widened, the time to be taken not to emit light pulse for cooling is short. Thereby, the area and the length of a non-amorphous mark are small so that it is difficult to form a mark having a desired length. As a result, the recording sensitivity deteriorates. On the other hand, when the recording power is enhanced to compensate this deficiency of the sensitivity, it is difficult to forma rapid cooling structure suitable formark formation. Therefore, not only can sufficient recording sensitivity not be obtained but also the protective layer may be damaged by the high recording power, resulting in deterioration of repetitive recording characteristics.

The inventors of the present invention have studied on improvement of the repetitive recording characteristics of an optical recording medium formed of Ag-In-Sb-Te-Ge and found that when an interface layer containing ZrO₂ is provided between a first protective layer and a recording layer, the repetitive recording characteristics can be improved.

However, it is also found that, for a phase change material formed of Ga-Sb-Sn-Ge, which is considered to be especially suitable for a high speed rewritable optical recording medium, for example, DVD ×6 to 8 or higher, the repetitive recording characteristics thereof deteriorate to the contrary when an interface layer mainly formed of ZrO₂ is provided. That is, considering the fact that the structure having an interface layer formed of ZrO₂ is effective in an optical recording medium containing Ag-In-Sb-Te-Ge and is not effective in an optical recording medium containing Ga-Sb-Sn-Ge, it is clear that there is a specific relationship between a recording material and a material for use in an interface layer. Therefore, selecting conditions and combinations of these materials are essential to improve repetitive recording characteristics. That is, it is clear that the structure of the border portion, i.e., the interface layer, between a first protective layer and a recording layer is optimized according to recording materials selected.

### SUMMARY OF THE INVENTION

Because of these reasons, the present inventors recognize that a need exists for a rewritable optical recording medium in which high speed recording, especially a recording speed not lower than a linear velocity of 20 m/s (equivalent to DVD ×6), can be performed while repetitive recording characteristics and preservation reliability thereof are not adversely affected.

Accordingly, an object of the present invention is to provide a rewritable optical recording medium in which high speed recording, especially a recording speed not lower than a linear velocity of 20 m/s (equivalent to DVD × 6) , can be performed while repetitive recording characteristics and preservation reliability thereof are not adversely affected.

Briefly this object and other objects of the present invention as hereinafter described will become more readily apparent and can be attained, either individually or in combination thereof, byanoptical recordingmedium including a substrate, a first protective layer located overlying the substrate, and containing a mixture of ZnS and SiO₂, an interface layer located overlying the first protective layer, and containing a material that containing Si and O, a phase change recording layer located overlying the interface layer and containing Sn, Sb, Ga, and Ge, a second protective layer located overlying the phase change recording layer, a reflective layer located overlying the second protective layer and optionally a third protective layer provided for anti-sulfuration located between the second protective layer and the reflective layer. Further, the content of Si and O in the interface layer is 10 to 60 % greater than the content of Si and O in the first protective layer.

It is preferred that, in the optical recording medium mentioned above, the layer thickness of the interface layer is 0.5 to 6 nm.

It is still further preferred that, in the optical recording medium mentioned above, the interface layer has a thermal conductivity not greater than 2.0 (W/mK) , and the phase change recording layer in a crystalline state has a refractive index n of from 2.3 to 2.6 for a wavelength of 660 nm.

It is still further preferred that, in the optical recording medium mentioned above, the material of the interface layer satisfies the following composition formula: (SiO₂)ₐ(TiO₂)_{b}(RE)_{c}. In the formula, RE represents at least one compound selected from rare earth oxides, a is 50 to 100, b is not less than 0 to less than 50, c is not less than 0 to less than 10, and a + b + c = 100 (mol %).

It is still further preferred that, in the optical recording medium mentioned above, the material of the interface layer includes at least one of a carbide and/or a nitride of a metal and/or a semi-metal in an amount of less than 10 mol % based on a total amount of material of the interface layer.

It is still further preferred that, in the optical recording medium mentioned above, the phase change recording layer further contains at least one element selected from the group consisting of In, Te, Al, Tl, Pb, Zn, Se, Mg, Bi, Cd, Hg, Mn, C, N, Au, Ag, Cu, Co and rare earth elements in an amount of less than 10 atomic %.

It is still further preferred that, in the optical recording medium mentioned above, the second protective layer contains a mixture of ZnS and SiO₂.

It is still further preferred that, in the optical recording medium mentioned above, the reflective layer contains Ag or an alloy thereof.

It is still further preferred that, in the optical recording mediummentioned above, the first protective layer has a layer thickness of from 40 to 200 nm, the recording layer has a layer thickness of from 6 to 20 nm, the second protective layer has a layer thickness of from 2 to 20 nm, the reflective layer has a layer thickness of from 100 to 300 nm, and the third protective layer has a layer thickness of from 0.5 to 8 nm.

It is still further preferred that, in the optical recording medium mentioned above, the substrate has a wobbled groove having a pitch of from 0.71 to 0.77 µm, a depth of from 22 to 40 nm, and a width of from 0.2 to 0.4 µm.

These and other objects, features and advantages of the present invention will become apparent upon consideration of the following description of the preferred embodiments of the present invention taken in conjunction with the accompanying drawings.

### BRIEF DESCRIPTION OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:
Fig. 1 is a graph illustrating the result of the composition analysis of an optical recording medium having good recording characteristics without deterioration of repetitive recording characteristics by Auger Electron Spectroscopy, which is ground from the first protective layer side to the thick layer direction by an ion milling method;
Fig. 2 is a diagram illustrating the schematic cross section of the phase change optical discmanufactured in Examples and Comparative Examples described below;
Fig. 3 is a diagram illustrating the maximum temperature reached inside a first protective layer during recording (thermal calculation results);
Fig. 4 is a diagram illustrating the maximum temperature reached inside a recording layer during recording (heat analysis calculation results);
Fig. 5 is a diagram illustrating the temperature distributions inside the optical recording medium with an interface layer and without an interface layer;
Fig. 6 is a diagram illustrating the maximum temperature reached inside a first protective layer and a recording layer during recording and the values of the thermal conductivity of each low thermal conductive material;
Fig. 7 is a diagram illustrating the temperature distribution inside the optical disc having an interface layer formed of Si02 when the interface layer is provided in different positions;
Fig. 8 is a diagram illustrating the recording power margin and the repetitive recording characteristics of Example 11 described below; and
Fig. 9 is a diagram illustrating the recording power margin and the repetitive recording characteristics of Comparative Example 3 described below.

### DETAILED DESCRIPTION OF THE INVENTION

The present invention is now described below in detail.

Based on the knowledge obtained from the result of the study by the inventors of the present invention as mentioned above, the inventors of the present invention have selected a recording material formed of Ga-Sb-Sn-Ge as an especially suitable recording material for high speed recording, i.e., not less than DVD ×6 recording, specifically corresponding to DVD × 8 recording. As a subsequent intensive study on improvement in repetitive recording characteristics of an optical recording medium with a strong focus on the selected recording material and the structure of the interface layer between a first protective layer and a recording layer, the inventors of the present invention have found a key factor. The factor is that the content of Si and O in the border portion between the first protective layer and the recording layer is 10 to 60 % greater than that in the first protective layer. As a result, the inventors of the present invention have found that, when an optical recording disc having such a structure is used, the repetitive recording characteristics thereof during high speed recording can be improved.

In addition, as a result of an intensive study on the relationship between physical properties of the recording material of Ga-Sb-Sn-Ge and oxide materials, and improvement of repetitive recording characteristics, the inventors of the present invention have found that the refractive index of a recording layer in a crystalline state, the thermal conductivity in an interface layer and the layer structures of an optical recording medium (positioning of each layer) are important factors. That is, the repetitive recording characteristics can be also improved by providing a phase change recording layer having a refractive index n of from 2.3 to 2.6 measured at 660 nm when in a crystalline state, and a low thermal conductive layer, i.e., an interface layer, between a first protective layer and a recording layer. Such a low thermal conductive layer contains a material having a relatively low thermal conductivity (not greater than 2.0 (W/mk) in comparison with the typical compound of ZrO₂ (thermal conductivity is not less than about 2.1 (W/mk)) and having non-crystalline characteristics. That is SiO₂, which has a thermal conductivity of about 1. 6 W/mK. The present invention was thus made.

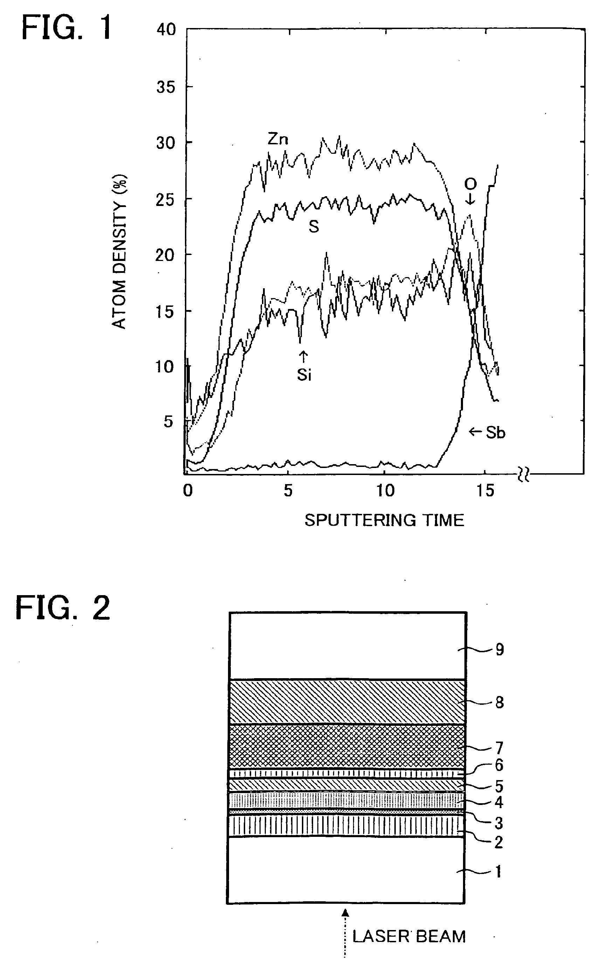

Fig. 1 is a graph illustrating the result of the composition analysis of an optical recording medium having good recording characteristics by Auger Electron Spectroscopy while the repetitive recording characteristics are not adversely affected. The optical recording medium is ground from the first protective layer side to the thick layer direction by an ion milling method.

Auger Electron Spectroscopy is especially effective for analysis of a thin layer. It is possible to observe the composition of a thin layer and resultantly the composition change in the depth direction of the thin layer by measuring a depth profile while grinding the thin layer by ion milling method. The measuring conditions are as follows:
Auger Electron Spectroscopy analyzer, SAM-660, manufactured by
Ulvac-phi Inc.
Acceleration voltage: 10 kV
Beam current: 50 nA
Tilt: 30 °
Ion gun acceleration voltage: 1 kV
Raster scan: 3 mm × 3 mm.

In Fig. 1, at the border portion between the first protective layer and the recording layer (Sb is shown as an only representative for the recording layer composition material) , it is possible to observe the state of the content of Si and O increasing about 30 to about 40 % more than that contained in the first protective layer. Generally, the graph is not stable during initial sputtering because of contamination materials absorbed to the surface of a sample during sample treatment. Therefore, the value as the content of S and O in the first protective layer is adopted after the graph is constant to a suitable degree.

As a method of changing the composition ratio of Si and O in the border portion, for example, there is a method such that, when a first protective layer is formed on a substrate by sputtering, ZnS and SiO₂ are co-sputtered using different targets and the layer forming speed of SiO₂ is accelerated just before finishing sputtering. In addition, there is another method in which sputtering is performed using ZnS-SiO₂ target and thereafter Si and O are implanted and attached by directly sputtering Si target (oxygen is used for incident ion) and SiO₂ target. As seen in these methods, it is difficult to distinctively discern the border between a first protective layer and an interface layer in some cases. In the present invention, the portion having a different composition from an average composition of a first protective layer is determined as an interface layer which starts from where sputtering conditions are changed to form the interface layer.

The layer in which Si and O are contained in a greater amount than that in the first protective layer preferably has a thickness of from 0.5 to 6 nm and more preferably from 2 to 4 nm. When the layer thickness is too thin, it may be difficult to obtain the effect anticipated by providing an interface layer. When the layer thickness is too thick, such a layer has an adverse impact on the optical and thermal characteristics of the optical recording medium, resulting in deterioration thereof, which is not preferred.

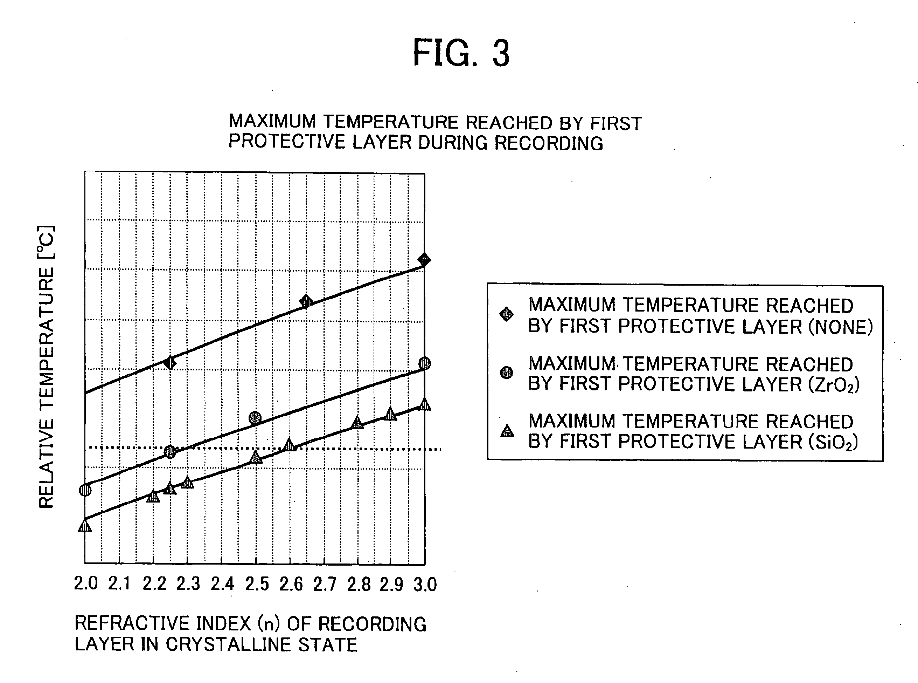

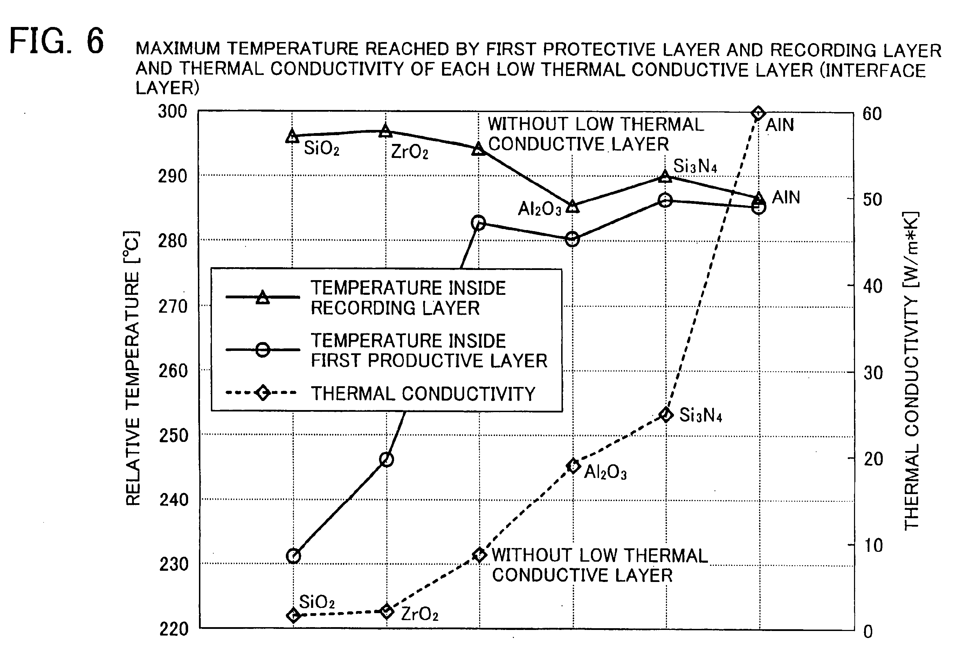

Figs. 3 to 7 are thermal calculation results confirming characteristics of each interface layer. In addition, in Fig. 6, the values (bulk value and room temperature) of materials contained in each interface layer are shown. The thermal calculation results support that "relationships between the thermal conductivity of low thermal conductive materials, the refractive index of a recording layer in a crystalline state, and the layer structure (positioning of each layer) "mentioned above are an important factor to improve the repetitive recording characteristics of an optical recording medium.

The thermal calculation results illustrated in Figs. 3 to 7 are calculated by using thermal calculation software (TEMPROFILE 5.0, thermal analysis software for an optical recording medium marketed by MM Research, Inc.). Input data are layer thickness of each layer, fraction indices of each layer obtained when λ was 660 nm, and typical bulk value (document value) for specific heat and thermal conductivity at room temperature. In addition, pulse waveforms of irradiation light used are waveforms used when a mark having the minimum mark length (3T single pattern; 3T mark) is recorded at DVD 8x recording by a laser beam having a rotational symmetry Gaussian profile. For the thermal calculation, the layer thicknesses of a first protective layer, an interface layer (i.e., a low thermal conductive layer) , a phase change recording layer, a second protective layer, a third protective layer, and a reflective layer are 56 nm, 4 nm, 16 nm, 7 nm, 4 nm, and 140 nm, respectively. When respective layer thicknesses are changed in the ranges of from 40 to 80 nm, 0.5 to 6 nm, 8 to 17 nm, 5 to 14 nm, 0.5 to 8 nm, and 100 to 300 nm, almost the same results are obtained as in Figs. 3 to 7.

Fig. 3 is a graph illustrating the calculation results of the maximumtemperature reached by a first protective layer during recording while the refractive index of a recording layer in a crystalline state is changed. In the graph, there is a graph (represented by ◆) when an interface layer is not provided, and there are graphs (respectively represented by • and ▲ when interface layers respectively containing ZrO₂ and SiO₂ are provided between a recording layer and a first protective layer.

According to the study made by the inventors of the present invention, it is found that the cause of deterioration of the repetitive recording characteristics of an optical recording medium is deterioration of the protective layer caused by the heat during recording.

As seen in Fig. 3, the temperature of a first protective layer depends on the refractive index of a recording layer in a crystalline state. In addition, as the refractive index drops, the maximum temperature reached is found to become low. The maximum temperature reached by a first protective layer is lowest when an interface layer containing SiO₂ is provided. Although the absolute temperature inside an optical recording medium is not actually known, the temperature of an interface layer containing mainly SiO₂ is about 20 °C lower than that of an interface layer mainly containing ZrO₂ on a calculation basis.

Therefore, it is expected from the calculation results illustrated in Fig. 3 that, when the refractive index of a recording layer in a crystalline state is lowered, that is, when a recording material having a low refractive index (not greater than about 2.2) in a crystalline state is used, the repetitive recording characteristics thereof can be improved because the rise in temperature of a protective layer canbe restrained for the case of ZrO₂. As a result of the evaluation of the characteristics performed by the inventors of the present invention, it is found that the repetitive recording characteristics of an optical recording medium having a low thermal conductive layer containing SiO₂ can be improved in comparison with an optical recording medium without a low thermal conductive layer (i.e., an interface layer) when the refractive index of a recording layer is up to about 2.6. When the temperature of a first protective layer is below the dotted line illustrated in Fig. 3, it can be anticipated that the repetitive recording characteristics can be improved even when an optical recording medium having a low thermal conductive layer containing ZrO₂ is used. That is, as seen in Fig. 3, when the refractive index of a recording layer in a crystalline state is not greater than 2.2, it can be expected that the temperature of a protective layer is sufficiently low even when a low thermal conductive layer containing ZrO₂ is used. However, when the actual evaluation was made, the repetitive recording characteristics were not improved.

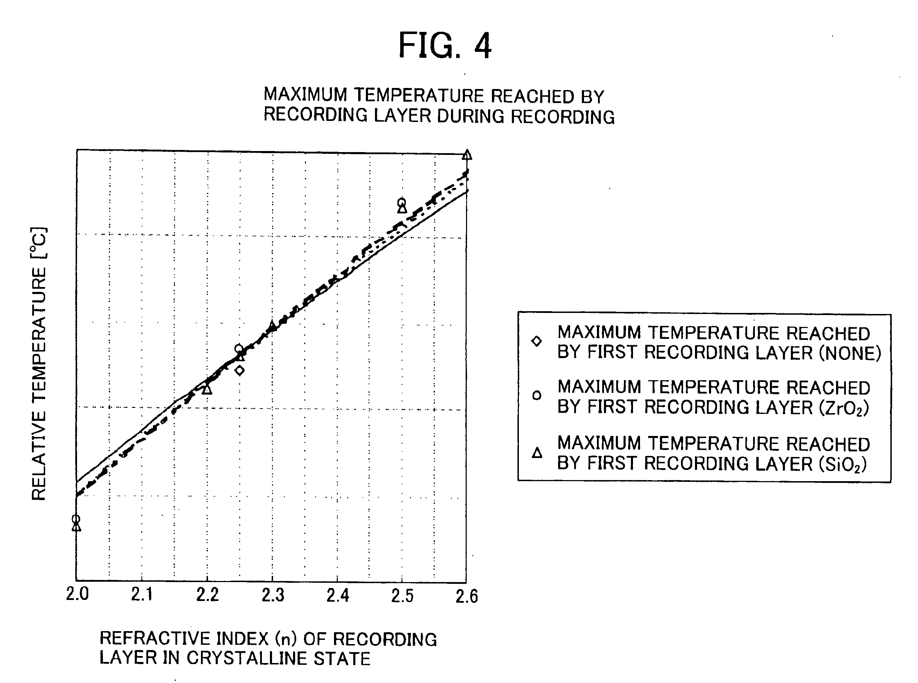

To determine the cause of this result, the maximum temperature reached by the recording layer was calculated. The results are shown in Fig. 4. In the graphs of Fig. 4, there is a graph (represented by 0) when an interface layer is not provided, and there are graphs (respectively represented by o and Δ) when interface layers respectively containing ZrO₂ and SiO₂ are provided between a recording layer and a first protective layer. In addition, it has already been found that, different from a first protective layer, themaximumtemperature reached by a recording layer is desired to be high in light of improvement of recording sensitivity.

In Fig. 4, the graphs of the temperature of the case with a low thermal conductive layer and the case without a low thermal conductive layer cross at the point where the refractive index of a recording layer in a crystalline state is around 2.2. It is found that, when the refractive index is below around 2.2, the maximum temperature reached of the recording layer becomes low while the temperature of the first protective layer is lowered. Therefore, the refractive index of a recording layer in a crystalline state is preferably higher than 2.2 in some degree and more preferably not less than 2.3 in light of assurance.

SiO₂ is the only oxide having a thermal conductivity lower than that of ZrO₂ which can be stably produced and supplied as far as the present inventors know. In addition, in the case of Al₂O₃ and Si₃N₄ described in JOPs mentioned above, the temperature distribution inside an optical recording medium is almost the same as in the case of an optical recording medium without a low thermal conductive layer, i . e . , an interface layer. Therefore, it is found that the improvement effect on the repetitive recording characteristics is extremely small.

These calculation results correspond to the fact that the inventors of the present invention could not discover a material other than an SiO₂ material by which the repetitive recording characteristics of the recording layer of an optical recording medium are improved when the inventors of the present invention actually manufactured and evaluated the optical medium.

In addition, when it comes to ZrO₂ having a low thermal conductivity like SiO₂, the repetitive recording characteristics can be improved when ZrO₂ is used in a complex oxide. However, it is found that, since ZrO₂ is a crystalline oxide, the crystallization of a recording layer is accelerated when such a crystalline oxide is used for a phase change material having an extremely high crystallization speed such as the recording material formed of Ga-Sb-Sn-Ge the inventors of the present invention have selected as suitable material for a recording layer for not slower than DVD 6x recording. Thereby, the preservation reliability of formed marks is extremely damaged, which is not preferred.

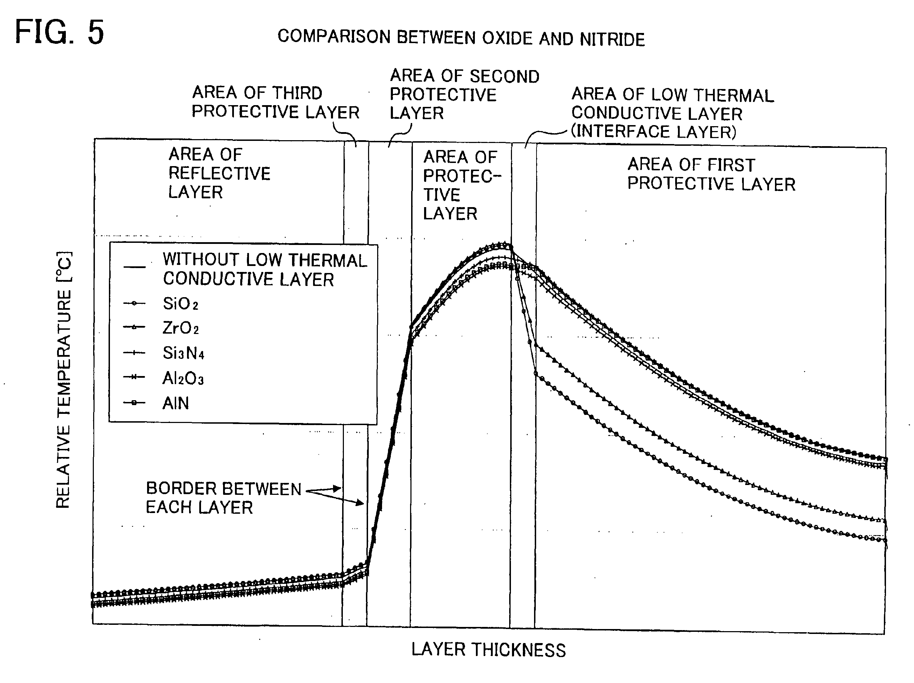

In Fig. 5, there are graphs illustrating the results (thermal calculation) of the temperature distribution inside an optical recording medium when a low thermal conductive layer is not provided and when a low thermal conductive layer containing an oxide and a nitride is provided. When the layer thickness of each layer is varied, each graph slightly changes but general tendency in the relationship between each graph such as above or below relationship does not change. In addition, in the case of no low thermal conductive layer, the width of the low thermal conductive layer area should be zero to be exact. However, to compare with other structures, an approximate state is illustrated ignoring the layer thickness.

In Fig. 6, there are graphs illustrating the maximum temperature reached by a first protective layer and a recording layer for each low conductive material illustrated in Fig. 5 during recording when the refractive index of the recording layer in a crystalline state is fixed at 2.3, and the thermal conductivity (bulk values, room temperature) representing each material for reference.

As seen in the calculation results illustrated in Fig. 6, since, when a material having a low thermal conductivity is used in an interface layer, the temperature rise in a protective layer is small so that the protective layer does not easily deteriorate, such a material has a high improvement effect with regard to the repetitive recording characteristics. There is no specific limit to the thermal conductivity. Theoretically, a material having a thermal conductivity of zero can be used but actually there is no such material.

In addition, when there is a mention that the interface layer "mainly" contains SiO₂, the "mainly" represents the primary content thereof and typically not less than 50 mol %.

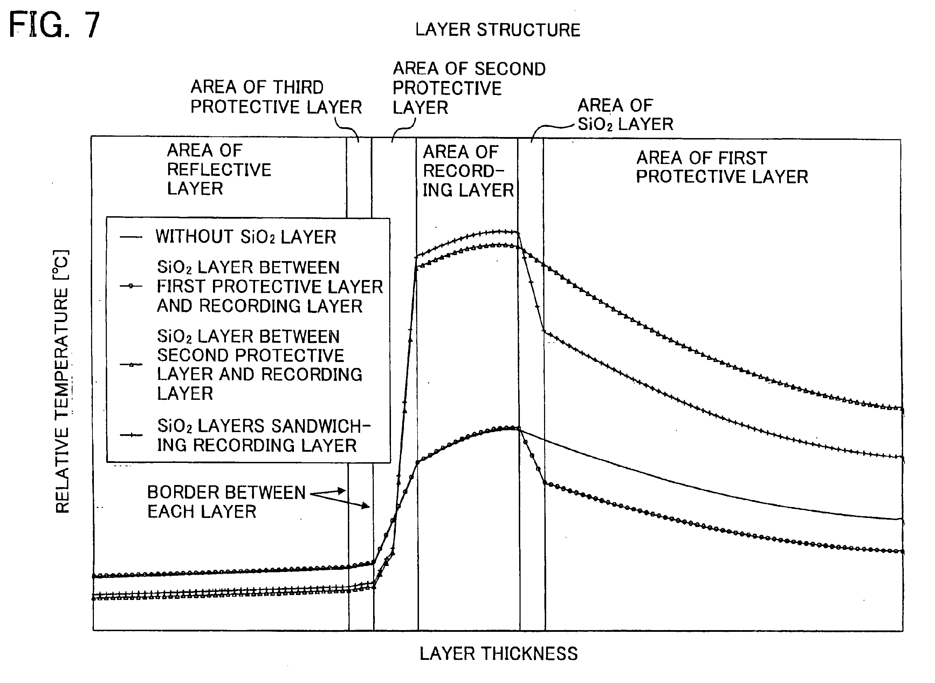

In Fig. 7, there are graphs illustrating the temperature distribution inside an optical recording medium having a low thermal conductive layer containing SiO₂. For comparison of layer structures, the position of the low thermal conductive layer is changed. As seen in Fig. 7, the temperature distribution greatly varies among when a low thermal conductive layer is provided between a first protective layer and a recording layer, when a low thermal conductive layer is provided between a second protective layer and a recording layer, and when a low thermal conductive layer is provided sandwiching a recording layer. It is found therefrom that, in comparison with the structure having no low thermal conductive layer, only the structure having a low thermal conductive layer between a first protective layer and a recording layer can restrain the temperature rise. As in the case of Fig. 5, when the layer thickness of each layer is varied, each graph slightly changes but general tendency in the relationship between each graph such as above or below relationship does not change. In addition, when a low thermal conductive layer is not provided, the width of the low thermal conductive layer area should be zero to be exact. Also when an SiO₂ layer is provided between a second protective layer and a recording layer, a low thermal conductive layer area having a certain width should be illustrated therebetween to be exact. However, to illustrate the four cases in one figure (i.e., Fig. 7) , an approximate state therefor is illustrated ignoring these layer thicknesses.

The optimal compositional material and the optimal layer thickness of a low thermal conductive layer are also mentioned in the present invention.

SiO₂ can be a main component of a low thermal conductive layer because of its low thermal conductivity of 1.6 W/mK. In addition, different from ZrO₂, SiO₂ does not have a crystalline characteristic so that SiO₂ is an excellent material for improving the repetitive recording characteristics without damaging the preservation reliability. This is true even when SiO₂ is used adjacent to a recording layer formed of a high speed crystallization material suitable for high speed recording such as DVD ×6 or higher.

In addition, when SiO₂ and other low thermal conductive materials are used in a combination such that the thermal conductivity of the combined material is not greater than that of ZrO₂, i.e., 2.0 W/mK, it is possible to obtain a low thermal conductive material excellent in mechanical characteristics and chemical durability.

Forexample, a material containing SiO₂ together with TiO₂ (having a thermal conductivity of approximately 6. 5W/mK) , which is one of hard oxide materials, can lower the high temperature viscosity of a layer and improve the mechanical characteristics thereof. Therefore, stability and durability of the layer can be improved. In addition, optical characteristics can be adjusted depending on the additional content of TiO₂.

When a rare earth oxide such as Y₂O₃ having a thermal conductivity of 27 W/mK is mixed with SiO₂, the volume change of the material to temperature is small. Therefore, such a material is effective to prevent cracking of a material, etc., because the stability of an optical recording medium having such a material is improved against temperature change during recording. Further, it is possible to improve the mechanical and thermal durability.

Other than the materials mentioned above, Al₂O₃ is an effective compound to improve high temperature durability, durability, and rigidity. SiO₂ can improve mechanical properties of a layer such as rigidity and high temperature durability when SiO₂ is combined with an intermediate oxide of Al₂O₃.

When TiO₂ and a rare earth oxide are used together with SiO₂, it is preferred that the content ratio of TiO₂ is less than 50 mol %, and the content ratio of the rare earth oxide is less than 10 mol %. There is no specific limit to these content ratios. However, when these content ratios are too high, it is difficult to form a low thermal conductive material having a thermal conductivity of not greater than 2.0 W/mK, which is not preferred. In addition, when the content ratio of TiO₂ is too high, the refractive index of a material containing TiO₂ tends to decrease, resulting in insufficiency of improvement effect on the repetitive recording characteristics. Further, specific elasticitymodulus and material uniformity of a material can be improved by containing a small amount of a rare earth oxide. Therefore, the content thereof is preferably less than 10 mol %. The content ratio of Al₂O₃ is preferably not greater than 30 mol % not to adversely affect the characteristics of SiO₂.

In addition, it is possible to improve adhesiveness between a low thermal conductive layer and a recording layer, and a protective layer by containing a carbide and/or a nitride of a metal and/or a semi metal in the material for use in the low thermal conductive layer. Specific Examples of such materials include Si, Ge, Ti, Zr, Ta, Nb, Hf, A1, Y, Cr, W, Zn, In, Sn and B. However, too high a content of such materials is not preferred because crystallization acceleration effect tends to be large, which leads to deterioration of preservation reliability and an adverse impact on low thermal conductivity. Although there is no specific limit to the lower limit of the content thereof, it is preferred to mix such a material in an amount of at least 1 mol % to fully exercise its effect.

It is preferred that a low thermal conductive layer has a thickness of from 0.5 to 6 nm in light of thermal and/or optical conditions. When the layer thickness is too thin, it is difficult to uniformly accumulate the low thermal conductive layer on a substrate and to obtain the effect of the low thermal conductive layer. When the layer thickness is too thick, the recording characteristics tends to deteriorate. Considering the long-term stability during repetitive recording, the layer thickness is more preferably 2 to 4 nm.

The reason the inventors of the present invention have determined a phase change material formed of Ga-Sb-Sn-Ge as especially suitable for a high speed recording, i.e., DVD ×6 or higher, specifically DVD x 8, are as follows.

As for a first primary composition element of Sb, it is possible to control the crystallization speed by changing the ratio of Sb in a composition material. As the ratio of Sb increases, its crystallization speed is fast. Therefore, Sb is an essential and excellent phase change material to perform high speed recording. However, it is impossible to realize a fast crystallization speed suitable for the speed not lower than DVD x 6, specifically DVD × 8, by Sb alone. Therefore, a second primary element of Ga is essentially introduced to improve the crystallization speed without impairing the repetitive recording characteristics and preservation reliability of an optical recording medium. In addition, even with a small addition amount of Ga, the state of a recording layer can be easily changed to amorphous state and the crystallization temperature of a phase change material is raised. That is, Ga is an element effective to the stability of marks.

A third primary element of Sn is an essential element for high speed crystallization and significantly effective to improvement of reflectivity.

A fourth primary element of Ge is also an essential element because, even with a small addition amount of Ge, preservation reliability of an optical recording medium is exponentially improved.

It is preferred to use a phase change material formed of Ga, Sb, Sn and Ge as a main component for a recording layer. The main component represents not less than 90 atomic % based on the total recording layer material.

It is also preferred for a recording material containing these elements to have a refractive index of from 2.3 to 2.6 measured at 660 nm. Thereby, a first protective layer does not receive an excessive thermal damage and a recording layer can efficiently absorb heat.

In addition, when the composition formula thereof is represented by Ga_{α}Sb_{β}Sn_{γ}Ge_{δ} (α, β, γ, and δ represent atomic %, and α + β + γ + δ = 100), the following relationships are particularly preferably satisfied: 2 ≤ α ≤ 20, 40 ≤ β ≤ 80, 5 ≤ γ ≤ 25, and 2 ≤ δ ≤ 20.

When the content of Sn is too small, the melting point of the materialtendstobetoohigh, resulting in deterioration of sensitivity. When the content of Sn is too large, the crystallization speed tends to be too high, resulting in difficulty of achieving an amorphous state. When the content of Sb is too small, the melting point of a material tends to be too high, resulting in deterioration of sensitivity. When the content of Sb is too high, preservation reliability of a material tends to deteriorate. With regard to Ga and Ge, when the content thereof is too small, preservation reliability of a material tends to deteriorate. When the content of Ga or Ge is too high, the crystallization temperature tends to be too high, resulting in difficulty of initialization.

It is preferred to add to a phase change recording layer at least one element of In, Te, Al, Zn, Se, Mg, Tl, Pb, Bi, Cd, Hg, Mn, C, N, Au, Ag, Cu, Co and rare earth elements in an amount of less than 10 atomic %.

The element of In has a similar effect of Ga and has a merit that In does not raise the crystallization temperature as high as Ga. Therefore, considering the initialization, In is effective to help the function of Ga. However, an excessive addition of In invites deterioration of repetitive recording characteristics, reflectivity, and playback reliability. Therefore, it is preferred to restrain the content of In to less than 10 atomic %.

Other than In, Bi, Tl, Pb, Al, Zn, Se, Cd, Hg, Mg, Mn and rare earth elements such as Dy can improve recording characteristics of the recording layer of an optical recording medium. Especially, In and Bi are preferred because these elements tend to have the same valent number as Sb. However, an excessive addition of such elements invites deterioration of playback reiability and initial jitter. Therefore, their content is preferred to be less than 10 atomic %. Among them, Mn is an additive element to improve preservation reliability and by which the addition amount of Ge can be small. The addition amount of Mn is preferably 1 to 5 atomic %. When the amount thereof is too small, crystallization speed tends not to be accelerated. When the amount thereof is too large, the reflectivity of a recording layer in a non-recorded state (a crystalline state) tends to be low, which is not preferred. It is also possible to improve the preservation reliability with addition of Te, Zn and Al. Al and Se can further accelerate crystallization speed. It is also possible to improve the recording sensitivity with addition of Se, C and N.

In addition, it is preferred to include Au, Ag, Cu and/or Co together with the additive elements mentioned above. These elements are also excellent in improving preservation reliability and solving initialization drawbacks. By using these elements with the additive elements mentioned above, it is possible to design a phase change material having an excellent preservation reliability and recording characteristics especially suitable for high speed recording of not less than a linear velocity of 20 m/s.

However, these additive elements can reduce the crystallization speed of a recording layer and have a characteristic hindering high speed recording. Therefore, it is preferred to restrain the upper limit of the total addition thereof to 5 atomic %. When these elements are added in too small an amount, the effect thereof is ambiguous. Therefore, the lower limit of the total addition of these elements is preferred to be 0.1 atomic %.

The layer thickness of a recording layer is preferably 6 to 20 nm. When the layer thickness is too thin, the recording characteristics tend to significantly deteriorate during repetitive recording. When the layer thickness is too thin, the recording layer tends to change in shape by repetitive recording, which leads to significant jitter increase. Further, to improve erasing characteristics by decreasing the difference in absorption ratio between a crystal state and an amorphous state, the layer thickness of a recording layer is preferably thin. The layer thickness thereof is more preferably from 8 to 17 nm.

It is preferred to regulate materials and the thickness of the layers other than an interface layer and a recording layer to realize desired characteristics.

It is preferred to use a mixture of ZnS and SiO₂ for a first protective layer and/or a second protective layer. Since this material is excellent in low thermal conductivity and chemical stability, the material is suitable to form a protective layer. Further, the layer formed of this material has a small remaining stress and deterioration of characteristics such as recording sensitivity and erasing ratio hardly occurs with this layer.

The optimal layer thickness of a first protective layer is selected based on thermal and optical conditions and is preferably 40 to 200 nm and more preferably 40 to 90 nm.

The layer thickness of a second protective layer is preferably 2 to 20 nm. This layer relates to cooling of a recording layer. Therefore, this layer has a direct significant impact on a recording layer. To obtain good erasing characteristics and good durability for repetitive recording, a second protective layer preferably has a thickness of at least 2 nm. When the thickness thereof is too thin, defects such as cracking tend to occur, which leads to deterioration of durability of repetitive recording and recording sensitivity. When the thickness thereof is too thick, the cooling speed of a recording layer tends to slow. Therefore, it is difficult to form marks, which leads to decrease in the marked area.

In a reflective layer, it is preferred to use solid Ag or an alloy mainly (not less than 90 atomic %) formed of Ag. By using Ag, which has an extremely high thermal conductivity, a structure suitable for rapid cooling can be formed. Considering reflectivity and thermal diffusion, solid Ag is the best selection but other metals such as Cu can be added to improve anti-corrosion thereof. The addition amount of such other metals such as Cu is preferably about 0.1 to about 10 atomic %, and particularly preferably 0. 5 to 3. 0 atomic % not to impair the characteristics of Ag. An excessive addition thereof adversely affects anti-corrosion property of Ag.

The layer thickness of a reflective layer is 100 to 300 nm. A reflective layer having too thin a layer is not preferred because such a reflective layer fails to fully exercise the function thereof. A reflective layer having too thick a layer is not preferred because productivity and mechanical characteristics such as disc warping deteriorate.

When a reflective layer is formed of solid Ag or an alloy mainly containing Ag and a second protective layer is formed of a material such as a mixture of ZnS and SiO₂ containing sulfur, sulfur reacts with Ag and the reflective layer is corroded, which causes defects of an optical recording medium formed of such layers. Therefore, such a second protective layer is used on the premise that a third protective layer (anti-sulfuration layer) free from sulfur is newly formed. Such a third protective layer is formed in light of (1) an ability to inhibit a sulfuration of Ag, (2) optical transparency to a laser beam, (3) low thermal conductivity, (4) good adhesiveness to a protective layer and a metal reflective layer, and (5) easy forming. Materials for use in forming a third protective layer are preferably oxides, carbides and nitrides which satisfy the requisites mentioned above. The layer thickness of a third protective layer is 0.5 to 8 nm. The layer having too thin a thickness is not preferred because it is difficult to form a uniform layer and to fully exercise the function as an anti-sulfuration layer. The layer having too thick a thickness is not preferred because the recording characteristics easily deteriorate.

The substrate for use in the optical discs mentioned above has a wobbled groove thereon having a pitch of from 0.71 to 0.77 µm, a depth of from 22 to 40 nm, and a width of from 0.2 to 0.4 µm. By using such a substrate, a DVD + RW medium which complies with the current DVD + R regulation and by which high speed recording, i.e., not lower than DVD × 6, specifically DVD × 8, can be performed can be provided. The reason the groove is wobbled is to access an unrecorded particular track, rotate the substrate at a constant linear velocity, etc.

Having generally described preferred embodiments of this invention, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

The present invention is specifically described with reference to Examples and Comparative Examples but not limited to these Examples, initialization devices, etc.

In addition, in Examples and Comparative Examples, a method of directly accumulating an SiO₂ layer on a first protective layer is selected to increase the content of Si and O contained in an interface layer. However, as long as a structure can be formed in which the content of Si and O contained in an interface layer is 10 to 60 % greater than that in a first protective layer, there is no specific limitation to the method of accumulating layers.

Fig. 2 is a schematic cross section illustrating a phase change optical disc (hereinafter referred to as optical disc) manufactured in Examples and Comparative Examples. The optical disc has a layer structure having a transparent substrate 1 on which a first protective layer 2, an interface layer 3, a phase change recording layer 4, a second protective layer 5, a third protective layer 6, a reflective layer 7, and a resin protective layer 8 are accumulated and another similar substrate 9 for use in bonding is attached thereto. The transparent substrate 1 has a guiding groove thereon for a laser beam.

### Example 1

An optical disc was manufactured as follows:
(1) Form the first protective layer 2 having a thickness of 60 nm formed of ZnS (80 mol %) - SiO₂ (20 mol %) on a polycarbonate substrate 1 having a diameter of 12 cm and a thickness of 0.6 mm by sputtering;
(2) Form the interface layer 3 on the first protective layer 2 by directly sputtering SiO₂ target;
(3) Form the phase change recording layer 4 having a thickness of 16 nm formed of Ga₅Sb₇₀Sn₁₇Ge₈, the second protective layer 5 having a thickness of 7nm formed of ZnS (80 mol %) - SiO₂ (20 mol %), a third protective layer 6 having a thickness of 4 nm formed of TiO₂ (70 weight %) - TiC, and the reflective layer 7 having a thickness of 200 nm on the interface layer in this order;
(4) Coat the resin protective layer 8 (SD318 manufactured by Dainippon Ink and Chemicals, Inc.) on the reflective layer 7 by spin coating method; and
(5) Attach another similar polycarbonate substrate 9 for use in bonding having a diameter of 12 cm and a thickness of 0.6 mm, which are the same dimensions as the polycarbonate substrate 1, to the resin protective layer 8.

From the depth profile result of an optical disc similarly manufactured at the same time, it was found that the increase in the content of Si and O contained in the interface layer 3 was about 30 % and the layer thickness of the interface layer 3 was about 2 nm.

Next, the optical disc was initialized by an initialization device (PCR DISK INITIALIZER, manufactured by Hitachi Computer Peripherals Co., Ltd.) while the optical disc was rotated at a constant linear velocity. While in rotation, the optical disc was irradiated with a laser beam having a power density of from 10 to 20 mW/µm² while the laser beam was moved with a regular interval in the radius direction.

As for evaluation of the recording characteristics, the jitter characteristic (σ) was evaluated for random patterns of 3T to 14T by an optical disc evaluation device (DDU-1000, manufactured by Pulsetec Industrial, Co., Ltd.) equipped with an optical pickup (660 nm, NA 0.65). The conditions were a recording linear velocity of 28 m/s (corresponding to DVD ×8) and a line density of 0.267 µm/bit. EFM+ modulated random patterns were recorded 1,000 times (hereinafter this recording is referred to as DOW 1000).

The jitter σ (%) is a standard deviation when a time "difference" at the border between an amorphous mark and a space against the synchronized standard clock is represented by Gauss distribution. The smaller the jitter, the better the characteristic.

Preservation reliability was evaluated for some samples by evaluating the recording characteristics of the optical disc mentioned above after leaving the optical disc in a temperature-controlled bath at 80 °C and 85 % RH for 300 hours.

The evaluation results are shown in Table 1. The evaluation results for Examples 2 to 10 and Comparative Examples 1 and 2 are also shown in Table 1. The character "-" in the column for preservation reliability in Table 1 represents the preservation reliability was not evaluated.

To obtain a phase change rewritable optical disc system, the jitter mentioned above is preferred to be not greater than 10 %. When the jitter is not greater than 9 %, a stable optical recording system can be achieved. Therefore, the evaluation system adopted is as follows: When DOW 1000 jitter surpasses 10 %, its evaluation is P (representing "poor"); When DOW 1000 jitter is greater than 9 % but not greater than 10 %, its evaluation is G (representing "good") ; and when DOW 1000 jitter is less than 9 %, its evaluation is E (representing "excellent").

The optical disc of Example 1 had good recording characteristic for a high speed recording of DVD ×8 and it was found that its repetitive recording characteristic did not deteriorate. In addition, the optical disc of Example 1 was evaluated again after the optical disc was left in a temperature-controlled bath at 80 °C and 85 % RH for 300 hours. The evaluation result was as good as before the test.

### Example 2

The optical disc of Example 2 was manufactured in the same manner as described in Example 1 except that the first protective layer 2 was formed by a co-sputtering method using different targets for ZnS and SiO₂ and thereafter the interface layer 3 was formed by increasing Ar pressure for SiO₂.

From the depth profile result of an optical disc similarly manufactured at the same time, it was found that the increase in the content of Si and O contained in the interface layer was about 10 % and the layer thickness of the interface layer was about 2 nm. When the recording characteristics of Example 2 were evaluated, although the jitter after repetitive recording was found to be entirely about 1.0 % higher than that of Example 1, the optical disc had good repetitive recording characteristics.

### Example 3

The optical disc of Example 3 was manufactured in the same manner as described in Example 1 except that the applied voltage for SiO₂ target to form the interface layer 3 was changed (raised).

From the depth profile result of an optical disc similarly manufactured at the same time, it was found that the increase in the content of Si and O contained in the interface layer was about 60 % and the layer thickness of the interface layer was about 2 nm. When the recording characteristics of Example 3 were evaluated, although the jitter after repetitive recording was found to be entirely about 0.5% higher than that of Example 1, the optical disc had good repetitive recording characteristics.

### Example 4

The optical disc of Example 4 was manufactured in the same manner as described in Example 1 except that the sputtering time (the time to be taken for layer forming) for the interface layer 3 was shortened.

From the depth profile result of an optical disc similarly manufactured at the same time, it was found that the increase in the content of Si and O contained in the interface layer was about 30 % and the layer thickness of the interface layer was about 0.5 nm. When the recording characteristics of Example 4 were evaluated, although the jitter after repetitive recording was found to be entirely about 1.0% higher than that of Example 1, the optical disc had good repetitive recording characteristics.

### Example 5

The optical disc of Example 5 was manufactured in the same manner as described in Example 1 except that the sputtering time (the time to be taken for layer forming) for the interface layer 3 was extended.

From the depth profile result of an optical disc similarly manufactured at the same time, it was found that the increase in the content of Si and O contained in the interface layer was about 30 % and the layer thickness of the interface layer was about 6 nm. When the recording characteristics of Example 5 were evaluated, although the jitter after repetitive recording was found to be entirely about 1.0 % higher than that of Example 1, the optical disc had good repetitive recording characteristics.

### Example 6

The optical disc of Example 6 was manufactured in the same manner as described in Example 1 except that the material of the phase change recording layer 4 was changed to Ga₃Sb₇₀Sn₁₇Ge₈Ag₂.

From the depth profile result of an optical disc similarly manufactured at the same time, it was found that the increase in the content of Si and O contained in the interface layer was about 30 % and the layer thickness of the interface layer was about 2 nm. When the recording characteristics of Example 6 were evaluated, although the jitter after repetitive recording was found to be entirely about 0.5 % higher than that of Example 1, the optical disc had good repetitive recording characteristics. In addition, the optical disc of Example 6 was evaluated again after the optical disc was left in a temperature-controlled bath at 80 °C and 85 % RH for 300 hours. The evaluation result was as good as before the test.

### Example 7

The optical disc of Example 7 was manufactured in the same manner as described in Example 1 except that the material of the phase change recording layer 4 was changed to Ga₃Sb₇₀Sn₁₇Ge₈Cu₂.

From the depth profile result of an optical disc similarly manufactured at the same time, it was found that the increase in the content of Si and O contained in the interface layer was about 30 % and the layer thickness of the interface layer was about 2 nm. When the recording characteristics of Example 7 were evaluated, although the jitter after repetitive recording was found to be entirely about 1.0% higher than that of Example 1, the optical disc had good repetitive recording characteristics. In addition, the optical disc of Example 7 was evaluated again after the optical disc was left in a temperature-controlled bath at 80 °C and 85 % RH for 300 hours. The evaluation result was as good as before the test.

### Example 8

The optical disc of Example 8 was manufactured in the same manner as described in Example 1 except that the material of the phase change recording layer 4 was changed to Ga₅Sb₇₀Sn₁₅Ge₈Bi₂.

From the depth profile result of an optical disc similarly manufactured at the same time, it was found that the increase in the content of Si and O contained in the interface layer was about 30 % and the layer thickness of the interface layer was about 2 nm. When the recording characteristics of Example 8 were evaluated, although the jitter after repetitive recording was found to be entirely about 1.0% higher than that of Example 1, the optical disc had good repetitive recording characteristics. In addition, the evaluation result was also good for recording at a recording linear velocity of 35 m/s (corresponding to the speed of DVD × 10).

### Example 9

The optical disc of Example 9 was manufactured in the same manner as described in Example 1 except that the material of the phase change recording layer 4 was changed to Ga₅Sb₇₀Sn₁₅Ge₈Mn₂.

From the depth profile result of an optical disc similarly manufactured at the same time, it was found that the increase in the content of Si and O contained in the interface layer was about 30 % and the layer thickness of the interface layer was about 2 nm. When the recording characteristics of Example 9 were evaluated, although the jitter after repetitive recording was found to be entirely about 0.5% higher than that of Example 1, the optical disc had good repetitive recording characteristics. In addition, the optical disc of Example 9 was evaluated again after the optical disc was left in a temperature-controlled bath at 80 °C and 85 % RH for 300 hours. The evaluation result was as good as before the test.

### Example 10

The optical disc of Example 10 was manufactured in the same manner as described in Example 1 except that the material of the phase change recording layer 4 was changed to Ga₅Sb₇₀Sn₁₅Ge₈Co₂.

From the depth profile result of an optical disc similarly manufactured at the same time, it was found that the increase in the content of Si and O contained in the interface layer was about 30 % and the layer thickness of the interface layer was about 2 nm. When the recording characteristics of Example 10 were evaluated, although the jitter after repetitive recording was found to be entirely about 0.5% higher than that of Example 1, the optical disc had good repetitive recording characteristics. In addition, the optical disc of Example 10 was evaluated again after the optical disc was left in a temperature-controlled bath at 80 °C and 85 % RH for 300 hours. The evaluation result was as good as before the test.

### Comparative Example 1

The optical disc of Comparative Example 1 was manufactured in the same manner as described in Example 1 except that the applied voltage for SiO₂ target to form the interface layer 3 was adjusted.

From the depth profile result of an optical disc similarly manufactured at the same time, it was found that the increase in the content of Si and O contained in the interface layer was about 80 % and the layer thickness of the interface layer was about 2 nm. When the recording characteristics of Comparative Example 1 were evaluated, it was found that the repetitive recording characteristics were not improved and the recording characteristics generally deteriorate.

### Comparative Example 2

The optical disc of Comparative Example 1 was manufactured in the same manner as described in Example 2 except that the discharging gas pressure for SiO₂ target to form the interface layer 3 was adjusted.

From the depth profile result of an optical disc similarly manufactured at the same time, it was found that the increase in the content of Si and O contained in the interface layer was about 5 % and the layer thickness of the interface layer was about 2 nm. When the recording characteristics of Comparative Example 2 were evaluated, it was found that the retentive recording characteristics were not improved in comparison with those of Example 1.

**Table 1**

| Examples | DOW 1000 characteristics | Preservation reliability |
|---|---|---|
| 1 | E | E |
| 2 | G | - |
| 3 | E | - |
| 4 | G | - |
| 5 | G | - |
| 6 | E | E |
| 7 | G | G |
| 8 | G | G |
| 9 | E | E |
| 10 | E | E |

| Comparative Examples | DOW 1000 characteristics | Preservation reliability |
|---|---|---|
| 1 | × | - |
| 2 | × | - |

### Example 11

The schematic cross section of the optical disc of Example 11 is illustrated in Fig. 2 and the detail thereof is as follows.
The transparent substrate 1: a polycarbonate substrate having a diameter of 12 cm, and a thickness of 0.6 mm and a guide groove having a track pitch of 0.74 µm thereon;
The first protective layer 2: formed of ZnS (80 mol %) - SiO₂ (20 mol %) with a thickness of 56 nm;
The interface layer (i.e., low thermal conductive layer) 3: formed by sputtering a SiO₂ target and having a thermal conductivity of 1.6 W/mK and a thickness of 4 nm;
The phase change recording layer 4: formed of Ga₅Sb₇₀Sn₁₇Ge₈ (n = 2.4) with a thickness of 16 nm;
The second protective layer 5: formed of ZnS (80 mol %) - SiO₂ (20 mol %) with a thickness of 7 nm;
The third protective layer 6: formed of SiC with a thickness of 4 nm; The reflective layer 7: formed of Ag with a thickness of 140 nm;
The resin protective layer 8: SD 318 manufactured by Dainippon Ink and Chemicals, Inc.; and

The another polycarbonate substrate 9: having the same diameter of 12 cm and the same thickness of 0. 6 mm as the transparent substrate 1.

The optical disc of Example 11 was manufactured and initialized in the same manner as described in Example 1. Also, the recording characteristics and preservation reliability thereof were evaluated in the same manner as described in Example 1.

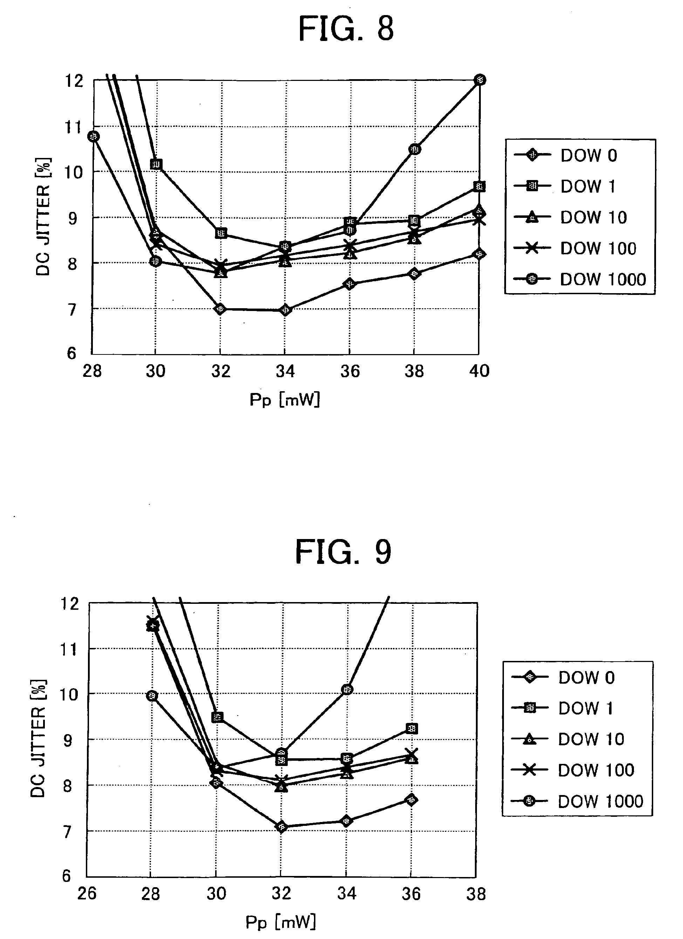

The results are shown in Fig. 8. As seen in Figs. 8 and 9, the recording characteristic of DOW 1000 of Example 11 was improved in comparison with the result of Comparative Example 3 described below.

### Example 12

The optical disc of Example 12 was manufactured in the same manner as described in Example 11 except that the interface layer 3 was formed by sputtering a target of SiO₂ (80 mol %) - TiO₂ (20 mol %) and has a thickness of 4 nm. When the recording characteristics of Example 12 was evaluated, it was found that the optical disc of Example 12 had good recording characteristics like the optical disc of Example 11.

### Example 13

The optical disc of Example 13 was manufactured in the same manner as described in Example 11 except that the interface layer 3 was formed by sputtering a target of SiO₂ (90 mol %) - Si₃N₄ (10 mol %) and has a thickness of 4 nm. When the recording characteristics of Example 13 were evaluated, it was found that the optical disc of Example 13 had good recording characteristics like the optical disc of Example 11.

### Example 14

The optical disc of Example 14 was manufactured in the same manner as described in Example 11 except that the interface layer 3 was formed by sputtering a target of SiO₂ (80 mol %) - Al₂O₃ (20 mol %) and has a thickness of 4 nm. When the recording characteristics of Example 14 were evaluated, it was found that the optical disc of Example 14 had good recording characteristics like the optical disc of Example 11.

### Example 15

The optical disc of Example 15 was manufactured in the same manner as described in Example 11 except that the phase change recording layer 4 was formed of Ga₉Sb₇₀Sn₁₇Ge₄ (n = 2.6). When the recording characteristics of Example 15 were evaluated, it was found that the optical disc of Example 15 had good recording characteristics like the optical disc of Example 11. In addition, good characteristics were obtained therefor for recording at recording linear velocity of 35 m/s (corresponding to the speed of DVD ×10).

### Example 16

The optical disc of Example 16 was manufactured in the same manner as described in Example 11 except that the phase change recording layer 4 was formed of Ga₇Sb₆₉Sn₁₈Ge₆ (n = 2.3). When the recording characteristics of Example 16 were evaluated, although the jitter after repetitive recording was found to be entirely about 0.5 % higher than that of Example 11, the optical disc of Example 16 had good repetitive recording characteristics.

### Example 17

The optical disc of Example 17 was manufactured in the same manner as described in Example 11 except that the phase change recording layer 4 was formed of Ga₃Sb₇₀Sn₁₇Ge₈Ag₂ (n = 2.5). When the recording characteristics of Example 17 were evaluated, although the jitter after repetitive recording was found to be entirely about 0.5 % higher than that of Example 11, the optical disc of Example 17 had good repetitive recording characteristics.

In addition, the optical disc of Example 17 was evaluated again after the optical disc was left in a temperature-controlled bath at 80 °C and 85 % RH for 300 hours. The evaluation result was as good as before the test.

### Example 18

The optical disc of Example 18 was manufactured in the same manner as described in Example 11 except that the phase change recording layer 4 was formed of Ga₃Sb₇₀Sn₁₇Ge₈Cu₂ (n = 2.3). When the recording characteristics of Example 18 were evaluated, although the jitter after repetitive recording was found to be entirely about 1.0% higher than that of Example 11, the optical disc of Example 18 had good repetitive recording characteristics.

In addition, the optical disc of Example 18 was evaluated again after the optical disc was left in a temperature-controlled bath at 80 °C and 85 % RH for 300 hours. The evaluation result was as good as before the test.

### Example 19

The optical disc of Example 19 was manufactured in the same manner as described in Example 11 except that the phase change recording layer 4 was formed of Ga₅Sb₇₀Sn₁₅Ge₈Bi₂ (n = 2.4). When the recording characteristics of Example 19 were evaluated, although the jitter after repetitive recording was found to be entirely about 1.0 % higher than that of Example 11, the optical disc of Example 19 had good repetitive recording characteristics.

In addition, good characteristics were obtained therefor for recording at recording linear velocity of 35 m/s (corresponding to the speed of DVD ×10).

### Example 20

The optical disc of Example 20 was manufactured in the same manner as described in Example 11 except that the phase change recording layer 4 was formed of Ga₅Sb₇₀Sn₁₅Ge₈Mn₂ (n = 2.5). When the recording characteristics of Example 20 were evaluated, although the jitter after repetitive recording was found to be entirely about 0.5% higher than that of Example 11, the optical disc of Example 20 had good repetitive recording characteristics.

In addition, the optical disc of Example 20 was evaluated again after the optical disc was left in a temperature-controlled bath at 80 °C and 85 % RH for 300 hours. The evaluation result was as good as before the test.

### Comparative Example 3

The optical disc of Comparative Example 3 was manufactured and evaluated in the same manner as described in Example 11 except that the interface layer 3 was changed to the same ZnS (80 mol%) - SiO₂ (20 mol %) having 8.0 W/mK as the first protective layer 2.

The results are shown in Fig. 9. As seen in Figs. 8 and 9, the repetitive recording characteristics of DOW 1000 of Comparative Example 3 deteriorated.

### Comparative Example 4

The optical disc of Comparative Example 4 was manufactured and evaluated in the same manner as described in Example 11 except that the interface layer 3 was formed of ZrO₂ (80 mol %) - Ti02 (20 mol%) with a thickness of 4 nm. It was found that the repetitive recording characteristics of Comparative Example 4 were not improved as compared with Example 11 and further the preservation reliability thereof deteriorated after the optical disc was left in a temperature-controlled bath at 80 °C and 85 % RH for 300 hours.

### Comparative Example 5

The optical disc of Comparative Example 5 was manufactured and evaluated in the same manner as described in Example 11 except that the phase change recording layer 4 was formed of Ga₁₀Sb₆₈Sn₂₀Ge₂ (n = 2.1). The recording sensitivity of the optical disc of Comparative Example 5 was better than that of Example 11 but the high speed recording characteristics of the optical disc of Comparative Example 5 were not good.

### Comparative Example 6

The optical disc of Comparative Example 6 was manufactured and evaluated in the same manner as described in Example 11 except that the phase change recording layer 4 was formed of Ga₅Sb₇₀Sn₁₉Ge₆ (n = 2.9). The recording sensitivity of the optical disc of Comparative Example 6 deteriorated in comparison with that of Example 11 and the high speed recording characteristics of the optical disc of Comparative Example 6 were not good.

## Claims

1. An optical recording medium, comprising:
a substrate;
a first protective layer located overlying the substrate, comprising a mixture of ZnS and SiO₂;
an interface layer located overlying the first protective layer, comprising a material comprising Si and O;
a phase change recording layer located overlying the interface layer, comprising Sn, Sb, Ga, and Ge;
a second protective layer located overlying the phase change recording layer;
a reflective layer located overlying the second protective layer; and
optionally a third protective layer for anti-sulfuration located between the second protective layer and the reflective layer,
wherein the content of Si and O in the interface layer is 10 to 60 % greater than the content of Si and O in the first protective layer.

2. The optical recording medium according to Claim 1, wherein the layer thickness of the interface layer is from 0.5 to 6 nm.

3. The optical recording medium according to Claim 1 or 2, wherein the interface layer has a thermal conductivity not greater than 2.0 (W/mK), and the phase change recording layer in a crystalline state has a refractive index n of from 2.3 to 2.6 measured at 660 nm.

4. The optical recording medium according to any one of Claims 1 to 3, wherein the material of the interface layer satisfies the following composition formula:
(SiO₂)ₐ(TiO₂)_{b}(RE)_{c}, wherein RE represents at least one compound selected from rare earth oxides, a is 50 to 100, b is not less than 0 to less than 50, c is not less than 0 to less than 10, and a + b + c = 100 (mol %).

5. The optical recording medium according to any one of Claims 1 to 4, wherein the material of the interface layer comprises at least one of a carbide and a nitride of a metal and a carbide and a nitride of a semi metal in an amount of less than 10 mol % based on the total amount of the material of the interface layer.

6. The optical recording medium according to any one of Claims 1 to 5, wherein the phase change recording layer further comprises at least one element selected from the group consisting of In, Te, Al, Tl, Pb, Zn, Se, Mg, Bi, Cd, Hg, Mn, C, N, Au, Ag, Cu, Co and rare earth elements in an amount of less than 10 atomic %.

7. The optical recording medium according to any one of Claims 1 to 6, wherein the second protective layer comprises a mixture of ZnS and SiO₂.

8. The optical recording medium according to any one of Claims 1 to 7, wherein the reflective layer comprises Ag or an alloy thereof.

9. The optical recording medium according to any one of Claims 1 to 8, wherein the first protective layer has a layer thickness of from 40 to 200 nm, the recording layer has a layer thickness of from 6 to 20 nm, the second protective layer has a layer thickness of from 2 to 20 nm, the reflective layer has a layer thickness of from 100 to 300 nm, and the third protective layer has a layer thickness of from 0.5 to 8 nm.

10. The optical recording medium according to any one of Claims 1 to 9, wherein the substrate comprises a wobbled groove having a pitch of from 0.71 to 0.77 µm, a depth of from 22 to 40 nm, and a width of from 0.2 to 0.4 µm.

## Patentansprüche

1. Optisches Aufzeichnungsmedium, umfassend:
ein Substrat;
eine erste Schutzschicht, die über dem Substrat angeordnet ist, umfassend eine Mischung von ZnS und SiO₂;
eine Grenzflächenschicht, die über der ersten Schutzschicht angeordnet ist, umfassend ein Material umfassend Si und O;
eine Phasenänderungs-Aufzeichnungsschicht, die über der Grenzflächenschicht angeordnet ist, umfassend Sn, Sb, Ga und Ge;
eine zweite Schutzschicht, die über der Phasenänderungs-Aufzeichnungsschicht angeordnet ist;
eine Reflexionsschicht, die über der zweiten Schutzschicht angeordnet ist;
und
gegebenenfalls eine dritte Schutzschicht für den Schwefelungsschutz, die zwischen der zweiten Schutzschicht und der Reflexionsschicht angeordnet ist,
wobei der Gehalt von Si und O in der Grenzflächenschicht 10 bis 60% größer ist als der Gehalt von Si und O in der ersten Schutzschicht.

2. Optisches Aufzeichnungsmedium nach Anspruch 1, wobei die Schichtdicke der Grenzflächenschicht 0,5 bis 6 nm ist.

3. Optisches Aufzeichnungsmedium nach Anspruch 1 oder 2, wobei die Grenzflächenschicht eine Wärmeleitfähigkeit von nicht mehr als 2,0 (W/mK) aufweist und die Phasenänderungs-Aufzeichnungsschicht in einem kristallinen Zustand einen Brechungsindex n von 2,3 bis 2,6, gemessen bei 660 nm, aufweist.

4. Optisches Aufzeichnungsmedium nach irgendeinem der Ansprüche 1 bis 3, wobei das Material der Grenzflächenschicht folgende Zusammensetzungsformel erfüllt:
(SiO₂)ₐ(TiO₂)_{b}(RE)_{c}, worin RE mindestens eine Verbindung ausgewählt aus den Seltenerdmetalloxiden darstellt, a 50 bis 100 ist, b nicht weniger als 0 bis weniger als 50 ist, c nicht weniger als 0 bis weniger als 10 ist und a + b + c = 100 (Mol-%).

5. Optisches Aufzeichnungsmedium nach irgendeinem der Ansprüche 1 bis 4, wobei das Material der Grenzflächenschicht mindestens eines von einem Carbid und einem Nitrid von einem Metall und einem Carbid und einem Nitrid von einem Halbmetall in einer Menge von weniger als 10 Mol-% auf Basis der Gesamtmenge des Materials der Grenzflächenschicht umfasst.

6. Optisches Aufzeichnungsmedium nach irgendeinem der Ansprüche 1 bis 5, wobei die Phasenänderungs-Aufzeichnungsschicht ferner mindestens ein Element ausgewählt aus der Gruppe bestehend aus In, Te, Al, TI, Pb, Zn, Se, Mg, Bi, Cd, Hg, Mn, C, N, Au, Ag, Cu, Co und Seltenerdelementen in einer Menge von weniger als 10 Atom-% umfasst.

7. Optisches Aufzeichnungsmedium nach irgendeinem der Ansprüche 1 bis 6, wobei die zweite Schutzschicht eine Mischung von ZnS und SiO₂ umfasst.

8. Optisches Aufzeichnungsmedium nach irgendeinem der Ansprüche 1 bis 7, wobei die Reflexionsschicht Ag oder eine Legierung davon umfasst.

9. Optisches Aufzeichnungsmedium nach irgendeinem der Ansprüche 1 bis 8, wobei die erste Schutzschicht eine Schichtdicke von 40 bis 200 nm aufweist, die Aufzeichnungsschicht eine Schichtdicke von 6 bis 20 nm aufweist, die zweite Schutzschicht eine Schichtdicke von 2 bis 20 nm aufweist, die Reflexionsschicht eine Schichtdicke von 100 bis 300 nm aufweist und die dritte Schutzschicht eine Schichtdicke von 0,5 bis 8 nm aufweist.

10. Optisches Aufzeichnungsmedium nach irgendeinem der Ansprüche 1 bis 9, wobei das Substrat eine gewobbelte Rille (wobbled groove) mit einem Abstand von 0,71 bis 0,77 µm, einer Tiefe von 22 bis 40 nm und einer Breite von 0,2 bis 0,4 µm umfasst.

## Revendications

1. Support d'enregistrement optique, comprenant :
un substrat ;
une première couche de protection recouvrant le substrat, comprenant un mélange de ZnS et de SiO₂ ;
une couche d'interface recouvrant la première couche de protection, comprenant un matériau comprenant du Si et du O ;
une couche d'enregistrement à changement de phase recouvrant la couche d'interface, comprenant du Sn, du Sb, du Ga et du Ge ;
une deuxième couche de protection recouvrant la couche d'enregistrement à changement de phase ;
une couche de réflexion recouvrant la deuxième couche de protection ; et
éventuellement, une troisième couche de protection anti-sulfuration située entre la deuxième couche de protection et la couche de réflexion,
dans lequel la teneur en Si et en O de la couche d'interface est supérieure de 10 à 60 % à la teneur en Si et en O de la première couche de protection.

2. Support d'enregistrement optique selon la revendication 1, dans lequel l'épaisseur de couche de la couche d'interface est de 0,5 à 6 nm.

3. Support d'enregistrement optique selon la revendication 1 ou 2, dans lequel la couche d'interface a une conductivité thermique qui n'est pas supérieure à 2,0 (W/mK), et la couche d'enregistrement à changement de phase dans un état cristallin a un indice de réfraction n mesuré à 660 nm de 2,3 à 2,6.

4. Support d'enregistrement optique selon l'une quelconque des revendications 1 à 3, dans lequel le matériau de la couche d'interface satisfait la formule de composition suivants :
(SiO₂)ₐ(TiO₂)_{b}(RE)_{c}, où RE représente au moins un composé sélectionné parmi les oxydes des terres rares, a est dans la plage de 50 à 100, b est dans la plage de 0 à 50 non compris, c est dans la plage de 0 à 10 non compris, et a + b + c = 100 (% en mole).

5. Support d'enregistrement optique selon l'une quelconque des revendications 1 à 4, dans lequel le matériau de la couche d'interface comprend au moins l'un d'un carbure et d'un nitrure d'un métal et d'un carbure et d'un nitrure d'un semi-métal en une quantité inférieure à 10 % en mole basée sur la quantité totale du matériau de la couche d'interface.

6. Support d'enregistrement optique selon l'une quelconque des revendications 1 à 5, dans lequel la couche d'enregistrement à changement de phase comprend en outre au moins un élément sélectionné dans le groupe consistant en le In, Te, Al, T1, Pb, Zn, Se, Mg, Bi, Cd, Hg, Mn, C, N, Au, Ag, Cu, Co et les éléments des terres rares en une quantité inférieure à 10 en pourcentage atomique.

7. Support d'enregistrement optique selon l'une quelconque des revendications 1 à 6, dans lequel la deuxième couche de protection comprend un mélange de ZnS et de SiO₂.

8. Support d'enregistrement optique selon l'une quelconque des revendications 1 à 7, dans lequel la couche de réflexion comprend du Ag ou un alliage de celui-ci.

9. Support d'enregistrement optique selon l'une quelconque des revendications 1 à 8, dans lequel la première couche de protection a une épaisseur de couche de 40 à 200 nm, la couche d'enregistrement a une épaisseur de couche de 6 à 20 nm, la deuxième couche de protection a une épaisseur de couche de 2 à 20 nm, la couche de réflexion a une épaisseur de couche de 100 à 300 nm, et la troisième couche de protection a une épaisseur de couche de 0,5 à 8 nm.

10. Support d'enregistrement optique selon l'une quelconque des revendications 1 à 9, dans lequel le substrat comprend une rainure oscillante ayant un pas de 0,71 à 0,77 µm, une profondeur de 22 à 40 nm, et une largeur de 0,2 à 0,4 µm.
